# DEMANDE DE BREVET EUROPEEN

(11) **EP 3 974 053 A1**
(43) Date de publication de la demande: **30.03.2022**
(21) Numéro de dépôt: 21208294.5
(22) Date de dépôt: 08.09.2017
(51) Int. Cl.: B01J 13/02

(54) **POUDRE MULTIMATERIAUX A GRAINS COMPOSITES POUR LA SYNTHESE ADDITIVE**

(30) Priorité: 09.09.2016 FR 1658443
(62) Demande divisionnaire de: 17771503.4
(71) Demandeur: HYDROMECANIQUE ET FROTTEMENT, 42160 Andrézieux-Bouthéon (FR)
(72) Inventeur: IACOB, Constantin, 76690 SAINT GEORGES SUR FONTAINE (FR); BUCHER, Sébastien, 42000 SAINT ETIENNE (FR); HEAU, Christophe, 42650 SAINT-JEAN-BONNEFONDS (FR); PROST, Fabrice, 42000 SAINT ETIENNE (FR)
(74) Mandataire: Novagraaf Technologies

(57) **Abrégé**

La présente invention concerne une poudre multimatériaux comprenant des particules support d'une granulométrie médiane d50 comprise entre 1 µm et 100 µm et des particules de fonctionnalisation ayant une granulométrie médiane d50 inférieure d'un facteur 10 à 1000 par rapport aux particules support. Selon l'invention, les particules support et les particules de fonctionnalisation forment des grains composites à structure cœur-enveloppe présentant chacun un cœur constitué par une particule support, et une enveloppe recouvrant entre 10 et 100% de la surface de la particule support et formée par au moins une couche superficielle des particules de fonctionnalisation.

La présente invention a également pour objet un procédé de réalisation d'une telle poudre.

## Description

La présente invention concerne la fabrication de poudres multimatériaux utilisées dans différents domaines (métallurgie, plasturgie...) pour des applications dans les techniques de synthèse additive et de traitement de surface par projection.

Par techniques de synthèse additive, on entend, au sens de la présente invention, toutes techniques permettant d'obtenir des objets en trois dimensions par consolidation de poudres. On peut notamment citer comme exemples non limitatifs : les techniques par impression 3D (SLM, SLS...), les techniques par injection (PIM, MIM), les techniques par projection de poudre (cold spray, D-gun...) et les techniques de compactage/frittage conventionnelles.

Il existe à l'heure actuelle comme poudres multimatériaux soit des mélanges de poudres de différentes natures avec une dispersion plus ou moins homogène des constituants en fonction du mode d'élaboration, soit des poudres d'alliages dans lesquelles les différents éléments qui les constituent sont sous forme de solutions solides et/ou de composés définis. Les procédés de synthèse de telles poudres sont relativement bien connus.

La technique par atomisation d'un métal en fusion permet notamment d'obtenir des poudres denses de morphologie sphérique. Cependant, les matériaux obtenus par cette technique sont soit des éléments purs, soit des alliages monophasés d'éléments miscibles comme, par exemple, certains aciers, des alliages de nickel, d'aluminium ou de titane. Ces poudres constituent aujourd'hui l'essentiel de l'offre pour les applications en fabrication additive.

La technique par co-broyage (mécanosynthèse) permet de réaliser des poudres multimatériaux en mélangeant intimement sous haute énergie, assistés de billes de broyage, des poudres de différentes natures, comme décrit dans les brevets américains US 3,816,080, US 3,591,362 et US 4,706,894. Par ce procédé, il est possible d'obtenir des grains composites avec une grande latitude de composition. Cependant, la morphologie et/ou la granulométrie des poudres obtenues par ce mode de réalisation ne sont pas favorables pour leurs applications en fabrication additive. De plus, les grains obtenus par cette technique sont constitués d'une dispersion plus ou moins homogène des différents constituants et ne possèdent pas la structure d'un cœur fonctionnalisé en surface.

La technique par atomisation/séchage (ou en anglais « *spray-drying* ») permet également de réaliser des poudres multimatériaux en réalisant l'atomisation et le séchage d'une suspension composée de poudres, d'un solvant et d'un liant organique, comme décrit dans les brevets américains US 5,122,182, US 3,617,358 et US 4,915,733. On obtient ainsi des grains composites issus de l'agglomération, par le liant organique qui joue le rôle de colle, des poudres élémentaires présentent dans la suspension. Les grains obtenus par ce mode de réalisation ont une morphologie sphérique. Cependant, leur porosité intragranulaire, ainsi que la présence de liants organiques les rendent impropres pour une utilisation en fabrication additive. Pour ce mode de réalisation, il est possible d'ajouter une étape de déliantage et densification des particules au moyen de diverses techniques basées sur une montée en température des particules suite à l'opération d'atomisation séchage. Il est alors possible d'obtenir des grains composites suffisamment denses et sphériques utilisables dans des procédés de traitement de surface par projection ou des procédés de fabrication par synthèse additive. Cependant, les grains ainsi obtenus sont des agglomérats constitués d'une dispersion non homogène des différents constituants et ne possèdent pas la structure d'un cœur fonctionnalisé en surface.

Par ailleurs, les technologies de dépôt par voie sèche comme les dépôts chimiques en phase vapeur (usuellement désignés par l'acronyme CVD) ou les dépôts physiques en phase vapeur (usuellement désignés par l'acronyme PVD) peuvent aussi être utilisés sur des substrats granulaires pour synthétiser des poudres multi-matériaux. Ces technologies sont alors généralement couplées à des procédés mettant en œuvre des dispositifs aptes à mettre les substrats granulaires en mouvement comme les lits fluidisés, les chambres de réaction rotatives ou les plateaux vibrants, comme cela est notamment enseigné par le brevet américain US 7,632,355. Avec de tels procédés, un dépôt peut être obtenu en surface des grains. La technologie PVD est très limitée en ce qu'elle ne permet pas de pouvoir réaliser le traitement de fines particules (dont le diamètre est inférieur à 100 µm). Elle est également très limitée en termes de taux de fonctionnalisation pour des durées raisonnables de traitement. La technologie CVD n'est, dans la plupart des cas, ni techniquement, ni économiquement favorable si l'on considère la toxicité et le coût des précurseurs utilisés.

Enfin, il est possible de synthétiser des grains multimatériaux par traitement de surface de grains support en voie humide par dépôt chimique comme évoqué dans les brevets américains US 6,372,346, US 5,064,463 et US 4,309,457. Dans ce cas un dépôt peut être obtenu en surface des grains. Cependant, ces modes de réalisation génèrent d'importantes quantités de rejets nuisibles pour l'environnement, et nécessitent l'utilisation de réactifs chimiques couteux et dangereux, ce qui complique considérablement le développement industriel de ces voies de synthèses Ces techniques permettent d'associer à l'échelle du grain différents matériaux.

Or, il peut s'avérer nécessaire de disposer de poudres dans lesquelles on associe différents matériaux à l'échelle du grain, afin de rendre possible et de faciliter la fabrication d'une grande diversité d'alliages, de pseudo-alliages, de composites, et de cermets.

A cette fin, la Demanderesse a mis au point un procédé permettant d'obtenir des grains composites en fonctionnalisant la surface de grains ou particules support par des éléments d'addition sous forme granulaires afin d'obtenir une microstructure en strates.

Les bénéfices de pouvoir disposer de tels grains composites sont multiples :
- pour faciliter leur mise en œuvre, en évitant le simple mélange des éléments support et des éléments d'addition (au lieu de la fonctionnalisation des premiers par les seconds), qui engendrent généralement des problèmes d'homogénéité et de ségrégation durant le stockage ou lors de son utilisation, puisque la composition étant obtenue à l'échelle du grain ;
- pour améliorer de façon significative l'homogénéité du matériau et la reproductibilité des procédés de mise en forme de ces poudres ;
- pour éviter la porosité intragranulaire et obtenir des microstructures particulières avantageuses du matériau produit à partir de ces grains fonctionnalisés ;
- pour faciliter le processus de frittage en phase liquide et la cinétique de diffusion en fonctionnalisant, par exemple, des particules support de haut point de fusion par des particules de fonctionnalisation à bas point de fusion. Cet exemple est particulièrement bien adapté pour la fabrication de cermets ;
- pour faciliter le processus de déformation en phase solide afin d'améliorer la densification de revêtements réalisés par projections : on peut notamment citer le cas de la projection dynamique à froid (ou « *Coldspray »* en anglais) où une particule support fragile est fonctionnalisée par des particules support ductiles qui assurent la déformation plastique nécessaire à l'obtention d'un dépôt dense et adhérent.

Plus particulièrement, la présente invention a donc pour objet une poudre multimatériaux comprenant des particules support d'une granulométrie médiane d50 comprise entre 1 µm et 100 µm et des particules de fonctionnalisation ayant une granulométrie médiane d50 inférieure d'un facteur 10 à 1000 par rapport aux particules support,

ladite poudre étant caractérisée en ce que lesdites particules support et lesdites particules de fonctionnalisation forment des grains composites à structure cœur-enveloppe présentant chacun :
un cœur constitué par une particule support, et
une enveloppe, qui recouvre entre 10 et 100% de la surface de ladite particule support et qui est formée par au moins une couche superficielle desdites particules de fonctionnalisation.

Les avantages qu'offre l'enveloppe constituée d'au moins une couche superficielle de particules de fonctionnalisation sont notamment liés :
- d'une part à l'augmentation de la surface spécifique des grains composites ainsi formés, induisant ainsi une meilleure réactivité lors du frittage ;
- mais aussi à l'augmentation de la densité apparente et tassée du lit de poudre favorisant une densification rapide lors de la fusion des particules en fabrication additive.

Dans la présente invention, les gammes de granulométrie revendiquées correspondent à un intervalle d10 - d90 donné, en faisant l'hypothèse que la poudre multimatériaux selon l'invention présente une distribution en nombre.

Par granulométrie médiane d50 (ou diamètre médian d50), on entend, au sens de la présente invention, la dimension en dessous de laquelle se situent 50% des particules.

De manière avantageuse, les particules de fonctionnalisation ont une granulométrie médiane d50 égale ou supérieure à 100 nm, ce qui a pour conséquence que l'enveloppe a une épaisseur supérieure ou égale à 100 nm. Cette taille de particules de fonctionnalisation permet notamment de limiter les problèmes d'hygiène et sécurité, liés à la toxicité des nanoparticules, lors de leurs manipulations.

De préférence, la proportion de particules support revêtues par la couche de fonctionnalisation peut être comprise entre 0.8 et 1, et de préférence entre 0.9 et 1.

Par proportion de particules supports revêtues, on entend, au sens de la présente invention, le rapport entre le nombre de particules fonctionnalisées et le nombre de particules totales pour un échantillon de poudre multimatériaux. Cette proportion est déterminée par analyses d'images prises au microscope d'une population de grains multimatériaux.

L'avantage qu'offre une proportion de particules supports revêtues supérieure à 0.9 est lié à l'homogénéité de la microstructure à l'échelle des grains. Il garantit que l'ensemble de ces derniers ont bien été fonctionnalisés et de façon équivalente. Cette caractéristique a un impact direct sur l'absence de défauts microstructuraux des matériaux élaborés à partir de ces poudres et donc de leurs performances ; il apporte également une sérieuse garantie sur la reproductibilité de leurs caractéristiques.

De préférence, la rugosité totale Rt de la surface de la couche de fonctionnalisation à l'échelle du grain peut être inférieure à 10 µm, et de préférence comprise entre 0.1 et 5pm.

Une surface rugueuse comporte typiquement des aspérités appelées « pics » et de cavités appelée « creux ».

Par rugosité totale Rt, on entend, au sens de la présente invention, la dénivellation la plus importante entre le plus haut sommet d'un pic et le fond le plus bas d'un creux.

La rugosité totale de la couche de fonctionnalisation à l'échelle de la particule est déterminée par analyses d'images de grains en coupe, prises au microscope.

L'avantage qu'offre une rugosité totale de la couche de fonctionnalisation à l'échelle du grain inférieure à 10 µm est lié aux caractéristiques d'écoulement de la particule support qui pourrait-être détériorées suite au traitement de fonctionnalisation. En effet, une rugosité totale trop importante à l'échelle de la particule entraine une diminution de la coulabilité de la poudre et rend son utilisation difficile dans les technologies de fabrications additives et de projections thermiques où les caractéristiques d'écoulement des poudres sont des paramètres essentiels. D'un autre côté, une rugosité totale proche de zéro n'est pas souhaitable si l'on considère la diminution de la surface spécifique qui y est associé, pour une granulométrie et une morphologie de grains supports données.

De manière avantageuse, la granulométrie médiane d50 desdites particules support peut être comprise entre 1 et 45 µm, ces valeurs pouvant correspondre respectivement à une dimension préférentielle d10 de 1 µm et une dimension d90 de 45 µm.

De préférence, la granulométrie médiane d50 desdites particules support peut être comprise entre 10 et 45pm, ce qui correspond à une distribution granulométrique particulièrement bien adaptée pour les procédés de fabrications additives.

Les grains composites peuvent avoir une morphologie irrégulière, avec un facteur de forme supérieur à 1 ou une morphologie sensiblement sphérique, avec un facteur de forme proche de 1.

Par facteur de forme, on entend au sens de la présente invention, le rapport entre la taille de l'axe de plus grande dimension, dit axe principale, et la taille de l'axe de plus petite dimension, dit axe secondaire, de la particule. Les grains composites selon l'invention pourront, de préférence, présenter une morphologie sensiblement sphérique.

A titre de particules support utilisables dans le cadre de la présente invention, on peut notamment citer des particules métalliques, céramiques ou organiques.

A titre de particules de fonctionnalisation utilisables dans le cadre de la présente invention, on peut notamment citer des particules céramiques, et/ou métalliques, et/ou organiques et/ou des particules comprenant au moins un élément choisi dans le groupe constitué du bore, du carbone, de l'oxygène et/ou de l'azote.

A titre de grains composites selon l'invention, on peut notamment citer :
- les grains céramiques fonctionnalisés par un métal pour la fabrication de cermets, comme par exemple : WC/Co, WC/Cu, WC/NiCr, TiC/Ni, B4C/Al, FeₓN_{y}/Ni, Feα(N)/Ni... ;
- les grains métalliques fonctionnalisés par une céramique pour la réalisation de composites à matrice métalliques (CMC), comme par exemple : Ti/ZrB2, Ti/TiC, Ti/SiC, Ti/ZrB₂/SiCAl/SiC, Fe/SiC, TA6V/ZrO₂, Al6061/TiC/WC ... ;
- les grains métalliques fonctionnalisés par un métal pour la fabrication d'alliages, d'intermétalliques et de pseudo-alliages, comme par exemple : W/Cu, W/Ni, Ti/Al, Ti/Al/C, Al/Cu, Al/Zn, Cu/Ni, Ti/AgCu, Ti/Mo, Mg/TiNi, Al/TiNi, Al6061/TiNi/SiC ... ;
- Des grains céramiques fonctionnalisés par une céramique, comme par exemple : ZrB2/SiC, Al2O3/SiO2, Si3N4/SiC ... ;
- les grains organiques fonctionnalisés par un métal pour la fabrication de composites fonctionnels, comme par exemple : PA/Ag, PEKK/Ag, PTFE/Ag, PE/Ni... ; et
- les grains métalliques ou céramiques fonctionnalisés par un matériau organique, comme par exemple Fe₃O₄/PA, C/PEKK, Cu/PE ....

La présente invention a également pour objet l'utilisation de la poudre multimatériaux selon l'invention comme matériau utilisable pour les techniques de mise en forme par frittage comme la synthèse additive et/ou pour des traitements de surface par projection, comme la projection à la flamme, l'HVOF, la projection plasma ou la projection à froid (« *cold spray* » en anglais).

La présente invention a encore pour objet un procédé de réalisation d'une poudre selon l'invention (premier mode de réalisation) comprenant :
o l'introduction, dans un réacteur à lit fluidisé recirculant, des particules support pour les brasser par des moyens pneumatiques et/ou hydrauliques ou mécaniques ; et les monter en température à l'aide de résistances chauffantes
o la réalisation d'une suspension des particules de fonctionnalisation dans un mélange de solvant organique et de liant organique ; puis
o le greffage, dans le réacteur, des particules de fonctionnalisation sur les particules support en pulvérisant la suspension sur les particules support en fluidisation.
o le traitement thermique des particules fonctionnalisées par une montée et un maintien en température dans le réacteur à lit fluidisé.

Les particules support et les particules de fonctionnalisation, mises en œuvre dans le procédé selon l'invention en vue d'obtenir des grains composites formant la poudre selon l'invention, sont telles que définies précédemment.

Par lit fluidisé recirculant, on entend, au sens de la présente invention, un réacteur à lit fluidisé équipé d'un système permettant d'une part de piéger les particules dans sa partie haute et d'autre de les réintroduire dans sa partie basse. Un tel réacteur peut fonctionner en mode diphasé (solide/gaz) ou triphasé (solide/gaz/liquide). Il peut être de plus avantageusement assisté de torches à plasma froid à pression atmosphérique, afin, par exemple, de faciliter des traitements de diffusion d'hétéroatomes comme l'azote, le carbone, le bore et l'oxygène.

La présente invention a aussi pour objet un procédé de réalisation d'une poudre selon l'invention (deuxième mode de réalisation) dans lequel on utilise à titre de réacteur un réacteur mécanique à haute énergie spécifiquement conçu pour implanter des particules de fonctionnalisations à la surface de grains support.

Dans un tel mode de réalisation, le procédé se déroule comme suit :
o introduction dans le réacteur des particules support et des particules de fonctionnalisation ;
o greffage dans le réacteur des particules de fonctionnalisation sur les particules support par une action mécanique à une température comprise entre 0°C et +150 °C, et de préférence à une température comprise entre 10 °C et 80 °C.

Les particules support et les particules de fonctionnalisation, mises en œuvre dans ce procédé selon l'invention en vue d'obtenir des grains composites formant la poudre selon l'invention, sont également telles que définies précédemment.

De manière avantageuse, le procédé selon l'invention pourra comprendre en outre, après l'étape de greffage, une étape de traitement thermique et/ou de surface des grains composites, à l'aide d'un lit fluidisé recirculant tel que défini précédemment.

De manière avantageuse, le procédé selon l'invention peut comprendre en outre, dans le cas où les grains composites ne présenteraient pas une morphologie sphérique, une étape de sphéroïdisation desdits grains par plasma chaud en lit fluidisé.

D'autres caractéristiques et avantages de la présente invention apparaîtront plus clairement à la lecture de la description suivante donnée à titre d'exemple illustratif et non limitatif et faite référence aux figures annexées dans lesquelles :
- La figure 1 représente un schéma de principe du dispositif utilisé pour la mise en œuvre du procédé selon l'invention selon le premier mode de réalisation (réacteur à lit fluidisé) ;
- La figure 2 représente un schéma de principe du dispositif en coupe utilisé pour la mise en œuvre du procédé selon l'invention selon le deuxième mode de réalisation (dispositif de broyage)) ;
- Les figures 3A à 6B sont des photographies prises au microscope électronique à balayage (MEB) de grains composites selon l'invention ;
- Les figures 7A et 7B sont des photographies prises au microscope optique montrant la micrographie en coupe d'un matériau composite Fer-Cuivre élaboré par compactage/frittage, à partir d'un mélange conventionnel de fer et de cuivre (figure 7A) et à partir d'une poudre de fer fonctionnalisée avec du cuivre (figure 7B).

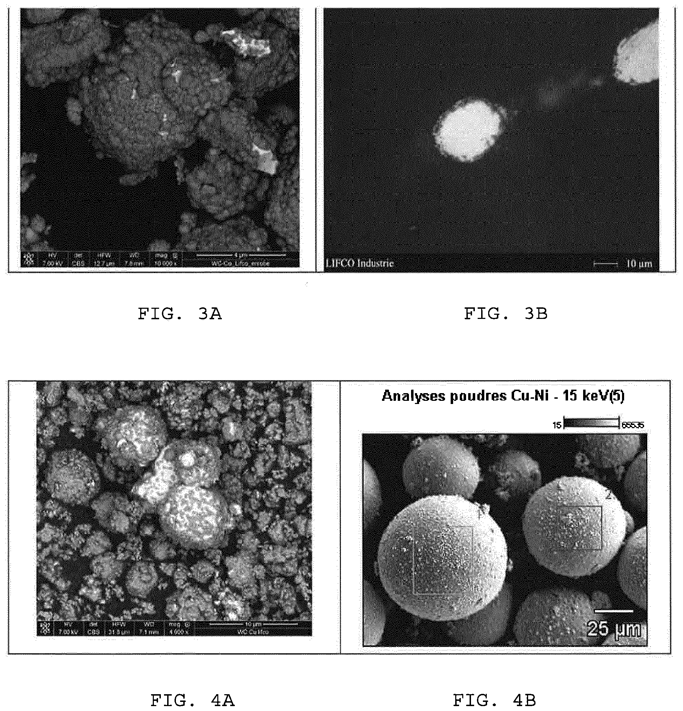

Les figures 3A à 7B sont commentées dans les exemples ci-après.

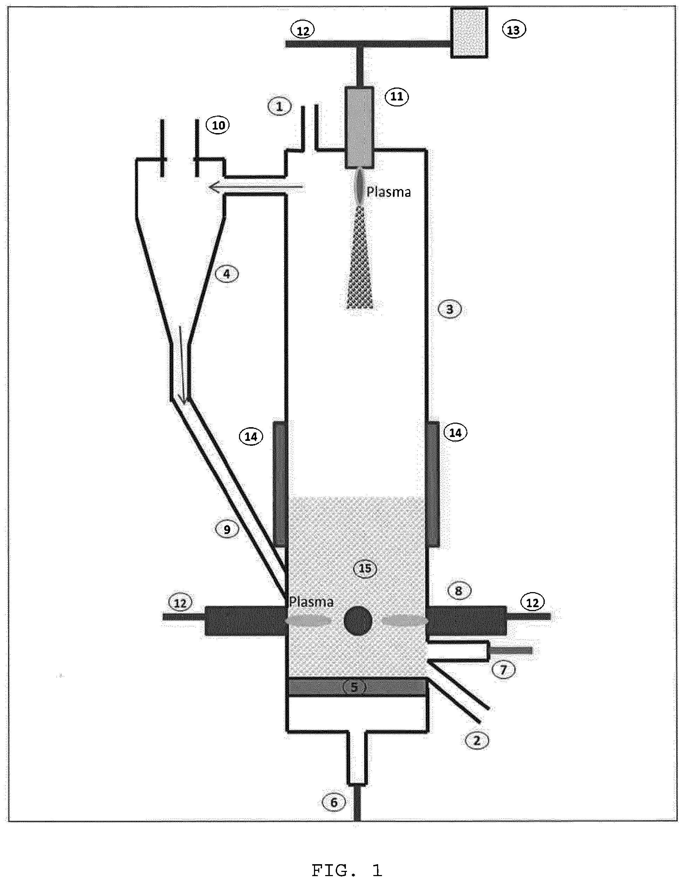

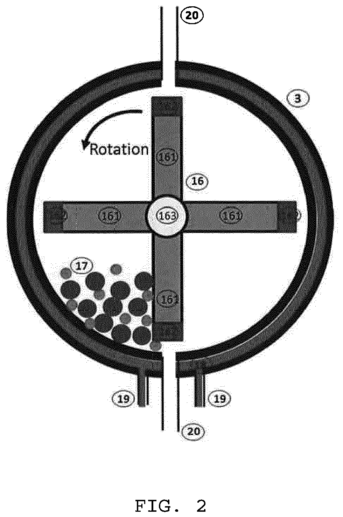

Les éléments identiques représentés sur les figures 1 et 2 sont identifiés par des références numériques identiques.

La figure 1 représente un schéma de principe du dispositif utilisé pour la mise en œuvre du procédé selon l'invention selon le premier mode de réalisation (réacteur à lit fluidisé recirculant). Il se compose des éléments suivants :
- conduite 1 de remplissage du réacteur,
- conduite 2 de vidange du réacteur,
- enceinte de réaction 3 cylindrique,
- cyclone 4,
- plaque poreuse 5,
- conduite d'alimentation 6 en gaz de fluidisation,
- buse de pulvérisation,
- quatre torches à plasma froid 8,
- conduite 9 de recirculation de la poudre,
- conduite 10 d'évacuation des gaz,
- torche à plasma chaud 11,
- alimentation 12 en gaz plasmagène,
- alimentation 13 en poudre,
- résistance chauffante 14,
- lit de poudre 15.

La figure 2 représente un schéma de principe du dispositif en coupe utilisé pour la mise en œuvre du procédé selon l'invention selon le deuxième mode de réalisation (dispositif mécanique). Il se compose des éléments suivants :
- enceinte cylindrique 3,
- rotor 16 composé de :
   - arbres 161,
   - pièces de compression 162, et
   - axe de fixation 163,
- mélanges 17 de poudre support et de fonctionnalisation,
- double enveloppe 18 de circulation de l'eau de refroidissement,
- conduites 19 d'entrée et de sortie de l'eau de refroidissement,
- conduites 20 de chargement et de déchargement des poudres.

L'invention est aussi illustrée plus en détail dans les exemples suivants. Dans ces exemples, sauf indication contraire, tous les pourcentages et parties sont exprimés en pourcentages massiques.

### EXEMPLES

### EXEMPLE 1

Une poudre de carbure de tungstène d'une granulométrie d50 de 10µm est fonctionnalisée à l'aide d'une poudre de cobalt d'une granulométrie d50 de 0.9pm.

L'opération est menée selon le deuxième mode de réalisation.

Les poudres sont introduites dans le dispositif mécanique à haute énergie dans un rapport massique de 80% WC et 20%Co. Un système de refroidissement par recirculation d'eau permet de maintenir la chambre de réaction à 20°C. L'enceinte est purgée par de l'argon afin de réaliser l'opération dans une atmosphère inerte. L'extrémité de la pièce de compression est ajustée à une distance comprise entre 1 et 3 mm de la paroi de l'enceinte. Celle-ci est mise en rotation à une vitesse comprise entre 4000 et 6000 tours/min, pour un temps de réaction compris entre 30 min et 60 min. Les températures relevées à l'intérieur de l'enceinte sont comprises entre 50 et 80°C. La poudre composite ainsi obtenue, présentée sur la figure 3A, est composée de grains de carbure de tungstène fonctionnalisé en surface par des grains de cobalt couvrant plus de 90% de la surface des particules supports.

### EXEMPLE 2

La même poudre de carbure de tungstène qu'à l'exemple 1 est fonctionnalisée à l'aide d'une poudre de cuivre d'une granulométrie d50 de 0.9pm, selon les mêmes paramètres opératoires qu'à l'exemple 1.

La poudre composite ainsi obtenue, illustrée sur la figure 4A, est formée des grains de carbure de tungstène fonctionnalisés en surface par des grains de cuivre couvrant plus de 60% de la surface des particules supports.

### EXEMPLE 3

Une poudre d'aluminium d'une granulométrie d50 de 40 µm est fonctionnalisée à l'aide d'une poudre de carbure de silicium d'une granulométrie d50 de 3.5 µm.

L'opération est menée selon les mêmes paramètres opératoires qu'à l'exemple 1.

Les poudres sont introduites dans le dispositif mécanique à haute énergie dans un rapport massique de 85% Al et 15% SiC.

La poudre composite ainsi obtenue, présentée sur la figure 3B (vue en coupe), est composée de grains d'aluminium fonctionnalisés en surface par des grains de carbure de silicium formant une couche supérieure à 1µm.

### EXEMPLE 4

Une poudre d'alliage de cobalt (stellite) d'une granulométrie centrée sur 50µm est introduite dans un lit fluidisé recirculant, conformément au premier mode de réalisation du procédé selon l'invention.

La poudre est mise en fluidisation par de l'azote sous un débit de gaz compris entre 1000 et 1500 1/h. La poudre est chauffée jusqu'à une température comprise entre 150 et 200°C. Une suspension aqueuse d'une poudre de nickel, d'une granulométrie centrée sur 2 µm, à laquelle est ajouté de l'alcool polyvinylique comme liant organique, est introduite dans l'enceinte du lit fluidisé par pulvérisation à l'aide d'une buse d'atomisation. L'azote est utilisé comme gaz d'atomisation, à une pression comprise entre 3 et 8 bars, et pour un débit compris 300 et 700 1/h. La suspension est pompée à des débits compris entre 0.8 et 1.2 1/h. A la fin de l'opération d'atomisation, la poudre est chauffée jusqu'à une température comprise entre 250°C et 350°C, correspondant à un premier pallier de déliantage. Celle-ci subit ensuite un traitement thermique de diffusion à une température comprise entre 500°C et 700°C. La poudre est enfin refroidie et conditionnée.

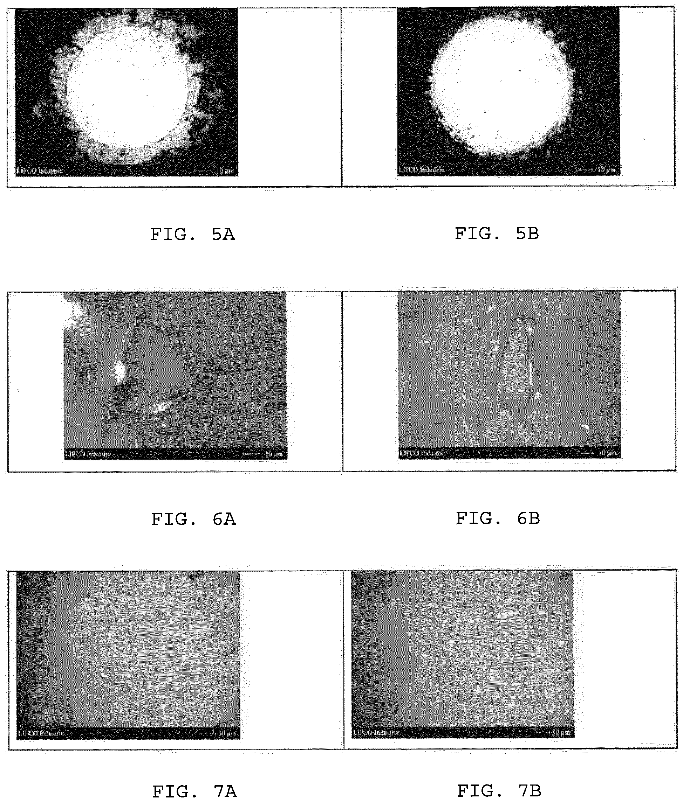

On obtient ainsi une poudre d'alliage de cobalt fonctionnalisée par une couche de nickel d'une épaisseur supérieure à 2µm, comme présenté sur la figure 5a (vue en coupe) .

### EXEMPLE 5

Selon le même mode de réalisation qu'à l'exemple 4 (selon le premier mode de réalisation du procédé selon l'invention), la même poudre d'alliage de cobalt est fonctionnalisée par du cuivre en utilisant une poudre de cuivre d'une granulométrie centrée sur 5 µm.

Dans ce cas, la suspension de la poudre de cuivre est réalisée dans un solvant organique en utilisant l'acétate polyvinylique comme liant organique. Lors de l'opération d'atomisation, la poudre d'alliage de cobalt est maintenue en fluidisation à une température comprise entre 80 et 150°C. La poudre fonctionnalisée subit ensuite les mêmes cycles de traitements thermiques que précédemment.

On obtient ainsi une poudre de cobalt fonctionnalisée par une couche de cuivre d'une épaisseur supérieure à 1µm, comme illustré sur la figure 5b (vue en coupe).

### EXEMPLE 6

Selon le même mode de réalisation (premier mode de réalisation du procédé selon l'invention) et les mêmes paramètres opératoire qu'à l'exemple 4, une poudre sphérique de cuivre d'une granulométrie centrée sur 40 µm (d50) est fonctionnalisée par du nickel couvrant plus de 95% de la surface des particules supports, comme illustré sur la figure 4b.

### EXEMPLE 7

Une poudre de polyamide (PA) d'une granulométrie d50 de 60 µm est fonctionnalisée à l'aide d'une poudre d'argent d'une granulométrie d50 de 2 µm.

L'opération est menée selon le deuxième mode de réalisation du procédé selon l'invention.

Les poudres sont introduites dans le dispositif mécanique à haute énergie dans un rapport massique de 93% de PA et 7% d'argent.

Un système de refroidissement par recirculation d'eau permet un refroidissement de la chambre de réaction. L'extrémité de la pièce de compression est ajustée à une distance comprise entre 1 et 3mm de la paroi de l'enceinte. Celle-ci est mise en rotation à une vitesse comprise entre 3000 et 5000 tours/min, pour un temps de broyage compris entre 10 min et 30 min. Les températures relevées à l'intérieur de l'enceinte sont comprises entre 20 et 50°C.

La poudre composite ainsi obtenue, illustrée sur la figure 6A&B, est composée de grains de polyamide fonctionnalisés en surface par des grains d'argent couvrant plus de 10% de la surface des particules supports.

### EXEMPLE 8

Les figures 7a et 7b sont des photographies prises au microscope optique montrant la micrographie en coupe d'un matériau composite Fer-Cuivre élaboré par compactage/frittage, d'une part à partir d'un mélange conventionnel de fer et de cuivre (comme illustré en figure 7a) et d'autre part à partir d'une poudre de fer fonctionnalisée avec du cuivre (comme illustré en figure 7a).

Les poudres sont préalablement comprimées en matrice sous presse uniaxiale à 700 MPa, puis les comprimés obtenus sont frittés sous atmosphère contrôlée à 1120°C.

En particulier, la figure 7A montre la microstructure du matériau obtenu à partir d'un mélange conventionnel des poudres de fer (d50 de 50 µm) et de cuivre (d50 de 5 µm).

La figure 7B montre la microstructure du même matériau obtenu à partir d'une poudre de fer fonctionnalisée cuivre conformément au même mode de réalisation du procédé selon l'invention qu'à l'exemple 5.

On constate visuellement une différence significative entre les deux microstructures :
- dans le cas d'une microstructure obtenue à partir du mélange des poudres (illustrée sur la figure 7a), on note une distribution non homogène des constituants, alors que
- dans le cas d'une microstructure obtenue à partir de la poudre fonctionnalisée (illustrée sur la figure 7b), on observe une microstructure particulière constituée d'une matrice de cuivre interconnectée avec une dispersion homogène de grains de fer.

## Revendications

1. Poudre multimatériaux, notamment utilisée dans les domaines de la métallurgie et de la plasturgie, comprenant des particules support d'une granulométrie médiane d50 comprise entre 1 µm et 100 µm et des particules de fonctionnalisation ayant une granulométrie médiane d50 inférieure d'un facteur 10 à 1000 par rapport aux particules support,
ladite poudre étant **caractérisée en ce que** lesdites particules support et lesdites particules de fonctionnalisation forment des grains composites à structure cœur-enveloppe présentant chacun :
o un cœur constitué par une particule support, et
o une enveloppe, qui recouvre entre 10 et 100% de la surface de ladite particule support et qui est formée par au moins une couche superficielle desdites particules de fonctionnalisation pour former une couche de fonctionnalisation, et
**en ce que** la rugosité totale Rt de la surface de la couche de fonctionnalisation à l'échelle du grain est comprise entre 0.1 et 5 µm,
**en ce que** la granulométrie médiane d50 desdites particules support est comprise entre 10 et 45 µm,
**en ce que** les particules de fonctionnalisation ont une granulométrie médiane d50 égale ou supérieure à 100 nm, et
**en ce que** la proportion de particules support revêtues par la couche de fonctionnalisation est comprise entre 0.9 et 1.

2. Poudre selon la revendication 1, dans laquelle lesdits grains composites ont une morphologie sphérique.

3. Poudre selon l'une quelconque des revendications 1 ou 2, dans laquelle lesdites particules support sont des particules métalliques, céramiques ou organiques.

4. Poudre selon l'une quelconque des revendications 1 à 3, dans laquelle lesdites particules de fonctionnalisation sont des particules céramiques, et/ou métalliques, et/ou organiques et/ou des particules comprenant au moins un élément choisi dans le groupe constitué du bore, du carbone, de l'oxygène et/ou de l'azote.

5. Utilisation de la poudre telle que définie selon l'une quelconque des revendications 1 à 4, comme matériau pour la synthèse additive et/ou pour les traitements de surface par projection.

6. Procédé de réalisation d'une poudre selon l'une quelconque des revendications 1 à 4 dans lequel
∘ on utilise à titre de réacteur un réacteur de type broyeur mécanique à haute énergie ;
∘ on introduit, dans ledit réacteur, lesdites particules support et lesdites particules de fonctionnalisation ;
∘ on réalise, dans ledit réacteur, le greffage des particules de fonctionnalisation sur les particules support par une action mécanique à une température comprise entre 0°C et +150 °C.

7. Procédé selon la revendication 6, selon lequel la température à laquelle on réalise le greffage est comprise entre 10 °C et 80 °C.

8. Procédé selon l'une quelconque des revendications 6 ou 7, comprenant en outre, après l'étape de greffage, une étape de traitement thermique et/ou de surface des grains composites, à l'aide d'un lit fluidisé recirculant.

9. Procédé selon les revendications 6 à 7, comprenant en outre, dans le cas où les grains composites ne présenteraient pas une morphologie sphérique, une étape de sphéroïdisation desdits grains par plasma chaud en lit fluidisé.
